(19) **Europäisches Patentamt / European Patent Office / Office européen des brevets**

(11) **EP 2 527 484 B1**

(12) **EUROPEAN PATENT SPECIFICATION**

(45) Date of publication and mention
of the grant of the patent:
**13.03.2019 Bulletin 2019/11**

(21) Application number: **11734790.6**

(22) Date of filing: **18.01.2011**

(51) Int Cl.:
**B32B 15/01** (2006.01)   **C21D 8/02** (2006.01)
**C23C 2/02** (2006.01)   **C23C 2/06** (2006.01)
**C23C 2/28** (2006.01)   **C21D 9/46** (2006.01)
**C22C 38/00** (2006.01)   **C22C 38/02** (2006.01)
**C22C 38/04** (2006.01)   **C22C 38/06** (2006.01)

(86) International application number:
**PCT/JP2011/051159**

(87) International publication number:
**WO 2011/090184 (28.07.2011 Gazette 2011/30)**

(54) **METHOD FOR MANUFACTURING A HIGH-STRENGTH GALVANIZED STEEL SHEET HAVING EXCELLENT FORMABILITY AND SPOT WELDABILITY**

VERFAHREN ZUR HERSTELLUNG EINES HOCHFESTEN FEUERVERZINKTEN STAHLBLECHS MIT HERVORRAGENDER VERARBEITBARKEIT UND PUNKTSCHWEISSBARKEIT

PROCÉDÉ DE PRODUCTION D'UNE TÔLE EN ACIER GALVANISÉ À HAUTE RÉSISTANCE PRÉSENTANT UNE EXCELLENTE APTITUDE AU TRAITEMENT ET UNE EXCELLENTE SOUDABILITÉ PAR POINTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2010 JP 2010262089**
**22.01.2010 JP 2010011951**

(43) Date of publication of application:
**28.11.2012 Bulletin 2012/48**

(73) Proprietor: **JFE Steel Corporation**
**Tokyo, 100-0011 (JP)**

(72) Inventors:
• **KANEKO, Shinjiro**
**Tokyo 100-0011 (JP)**
• **NAKAGAITO, Tatsuya**
**Tokyo 100-0011 (JP)**

• **KAWASAKI, Yoshiyasu**
**Tokyo 100-0011 (JP)**
• **NAGATAKI, Yasunobu**
**Tokyo 100-0011 (JP)**

(74) Representative: **Grünecker Patent- und Rechtsanwälte**
**PartG mbB**
**Leopoldstraße 4**
**80802 München (DE)**

(56) References cited:
**EP-A1- 2 402 470**   **EP-A1- 2 527 482**
**EP-A1- 2 527 483**   **WO-A1-03/010351**
**JP-A- 2008 291 304**   **JP-A- 2009 149 938**
**JP-A- 2009 209 451**   **JP-A- 2010 255 097**

**Description**

[Technical Field]

The present invention relates to a method for manufacturing a high-strength galvanized steel sheet having excellent formability and spot weldability that is suitable for a material used in industrial sectors, such as automobiles and electronics.

[Background Art]

In recent years, from the viewpoint of global environmental conservation, improvement of fuel efficiency in automobiles has been an important issue. To address this issue, there is a strong movement under way to strengthen body materials in order to decrease the thickness of components, thereby decreasing the weight of automobile bodies.
However, steel sheets having higher strength tend to have lower ductility and poorer formability. Thus, under the existing circumstances, there is a demand for the development of materials having high strength and excellent formability.
In processing of high-strength steel sheets into parts having complicated shapes, such as automotive parts, cracking and necking in stretched portions and stretch flange portions are great problems. Thus, there is also a demand for a high-strength steel sheet having high ductility and stretch flangeability that can overcome the problems of cracking and necking.
In order to improve the formability of high-strength steel sheets, various sheets of multi-phase high-strength galvanized steel, such as ferrite-martensite dual-phase steel and TRIP steel, which utilizes the transformation-induced plasticity of retained austenite, have been developed.
For example, Patent Literature 1 proposes a ductile steel sheet that has a specified chemical composition and a specified volume percentage of retained austenite and martensite and is manufactured by a specified method. Patent Literature 2 proposes a ductile steel sheet that has a specified chemical composition and is manufactured by a specified particular method. Patent Literature 3 proposes a ductile steel sheet that has a specified chemical composition and a specified volume percentage of ferrite, bainitic ferrite, and retained austenite.
However, the techniques described in Patent Literatures 1 to 3 principally aim to improve the ductility of high-strength steel sheets and do not fully consider stretch flangeability. Thus, there is a problem that the shape of a part is limited in press forming. In addition, these techniques require the addition of a large amount of alloying element to achieve desired strength and formability. This results in hardening of a fused portion of a spot weld, softening of a heat-affected zone (HAZ), and embrittlement of a fused portion during hardening, thus decreasing weld strength.
With respect to spot weldability, for example, Patent Literature 4 proposes a high-strength cold-rolled steel sheet having improved spot weldability because of structural control and the addition of a minute amount of Mo. Patent Literature 5 proposes a steel sheet having satisfactory formability and spot weldability because of the addition of a precipitation hardening element. Patent Literature 6 proposes a multi-phase steel sheet having improved spot weldability because of a decrease in the amount of Si and P.
Patent Literature 4 proposes to reduce weld defects, such as cracking and holes, in spot welding by the addition of Mo. However, Patent Literature 4 has only described tensile shear strength and has not fully described cross tension strength (ductility ratio), which often becomes a problem in high-strength materials. Patent Literature 5 proposes to ensure adequate strength by precipitation hardening of ferrite using carbonitride and reduce the amount of C, Si, and Mn to prevent cracking in a nugget during inspection using a chisel. However, even if inspection after welding is performed successfully, not much consideration has been given to spot weld strength from a practical standpoint. Patent Literature 6 only describes dusting and fracture morphology in a tensile test and does not describe spot weld strength from a practical standpoint. Furthermore, Patent Literature 6 only describes manufacture by a hot-rolling process.
Patent Literature 7 relates to a high strength galvanized steel sheet having a tensile strength TS of 590 MPa or more and exhibiting excellent workability (elongation and stretch flangeability) and a method for manufacturing the same.
Patent Literature 8 relates to a high strength galvanized steel sheet having excellent formability and stability of mechanical properties.
Patent Literature 9 relates to a high-strength galvanized steel sheet having excellent anti-burring performance with a low burr height and a method for manufacturing such a high-strength galvanized steel sheet.
Patent Literature 10 relates to a steel sheet excellent in both a balance between strength and elongation and a balance between strength and hole expandability, in other words, a multi-phase steel sheet having an excellent balance between strength and hole expandability.

[Citation List]

[Patent Literature]

[PTL 1] Japanese Unexamined Patent Application Publication No. 2001-140022
[PTL 2] Japanese Unexamined Patent Application Publication No. 4-26744
[PTL 3] Japanese Unexamined Patent Application Publication No. 2007-182625
[PTL 4] Japanese Unexamined Patent Application Publication No. 2001-152287
[PTL 5] Japanese Unexamined Patent Application Publication No. 2002-80931
[PTL 6] Japanese Unexamined Patent Application Publication No. 2001-279377
[PTL 7] EP 2 402 470 A1
[PTL 8] EP 2 527 482 A1
[PTL 9] EP 2 527 483 A1
[PTL 10] WO 03/010351 A1

[Summary of Invention]

[Technical Problem]

In view of the situations described above, it is an object of the present invention to provide a method for manufacturing a high-strength galvanized steel sheet that has high strength (tensile strength TS of 540 MPa or more) and excellent formability (high ductility and stretch flangeability) and spot weldability.

[Solution to Problem]

The following are experiments on which the present invention is based.

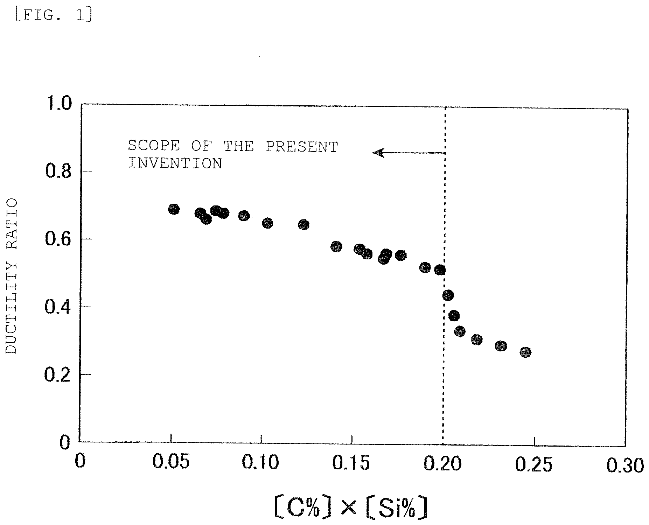

Steel ingots that contained 0.04% to 0.16% C, 0.7% to 2.3% Si, 1.5% to 1.6% Mn, 0.01% to 0.02% P, 0.002% to 0.003% S, 0.02% to 0.03% Al, and 0.0025% to 0.0035% N on a mass percent basis were produced in a laboratory. The C and Si contents were mainly changed. The steel ingots were heated to 1200°C, were hot-rolled into sheets having a thickness of 3.2 mm at a finishing temperature of 870°C, were held in a furnace at 520°C for one hour, and were cooled in the furnace. After pickling, the sheets were cold-rolled to form cold-rolled steel sheets having a thickness of 1.4 mm. The cold-rolled steel sheets were then annealed at 825°C for 120 seconds and were cooled and held at 520°C for 60 seconds. The cold-rolled steel sheets were then immersed in a galvanizing bath and were then alloyed at 550°C for 15 seconds to form galvanized steel sheets. Two of the steel sheets were spot-welded such that the nugget diameter in a cross section was 5.0 mm. The shear tensile strength and the cross tension strength of the welded sheet were measured to calculate ductility ratio (cross tension strength/shear tensile strength). The spot welding was performed and evaluated in accordance with The Japan Welding Engineering Society (JWES) standard WES 7301. As illustrated in Fig. 1, it was found that when the product of the C content and the Si content was 0.20 or less this resulted in high ductility ratios and significantly improved spot weldability.

As a result of extensive studies to develop a high-strength galvanized steel sheet that has high strength (tensile strength TS of 540 MPa or more) and excellent formability (high ductility and stretch flangeability) and spot weldability, the present inventors also found the following.

High strength and improved formability (ductility and stretch flangeability) can be achieved without impairing spot weldability by appropriately controlling the ferrite phase fraction (area ratio) and the structural morphology of the second phase while controlling the C, Si, and Mn contents within appropriate ranges, and controlling the product of the C content and the Si content within a particular range.

The present invention was achieved on the basis of these findings and is summarized as follows.

A method for manufacturing a high-strength galvanized steel sheet according to claim 1.

[Advantageous Effects of Invention]

The present invention allows the manufacture of a high-strength galvanized steel sheet that has high strength (tensile strength TS of 540 MPa or more) and excellent formability (high ductility and stretch flangeability) and spot weldability. For example, use of a high-strength galvanized steel sheet, which is manufactured according to the present invention, in an automobile structural member can further improve the safety of occupants and improve mileage because of a significant reduction of an automobile body weight.

[Brief Description of Drawings]

Fig. 1 is a graph showing the relationship between ductility ratio and the product of the C content and the Si content.

[Description of Embodiments]

The present invention will be further described below.
Unless otherwise specified, "%" of the component element content refers to "% by mass".

1) Composition

C: 0.04% or more and 0.10% or less

C is important in strengthening steel, has high solid-solution hardening ability, and is indispensable for controlling area ratio and hardness in structural reinforcement. It is difficult to have required hardening ability at a C content of less than 0.04%. However, a C content of more than 0.10% results in poor weldability and marked hardening of a low-temperature transformation phase, such as martensite, which results in poor formability, particularly poor stretch flangeability. Thus, the C content is in the range of 0.04% to 0.10%.

Si: 0.7% or more and 2.3% or less

Si can promote the formation of ferrite and improve work hardening ability of a ferrite phase and ductility. Si is effective in solid-solution hardening and in increasing strength. These effects require the addition of 0.7% or more Si. However, an excessive addition of more than 2.3% Si results in poor surface quality and low adhesion of coating. Thus, the Si content is 0.7% or more and 2.3% or less, preferably 1.2% or more and 1.8% or less.

$[C\%] \times [Si\%] \leq 0.20$

It is very important in the present invention to integrally control the C content and the Si content. C and Si can increase the hardness of a fused portion in spot welding and promote stress concentration between a fused portion and a base metal to decrease weld strength. In particular, the addition of these elements in combination synergistically produces these effects, and an excessive addition of these elements markedly decreases weld strength. Thus, the product of the C content (%) and the Si content (%) is 0.20 or less.

Mn: 0.8% or more and 2.0% or less

Mn is effective in strengthening steel. Mn can stabilize austenite and is needed to control the second phase fraction. To this end, an addition of 0.8% or more Mn is required. However, an excessive addition of more than 2.0% Mn results in an increase in the area ratio of a martensite phase in the second phase, making it difficult to ensure material stability. With recent increases in the costs of Mn alloys, an excessive addition of Mn can increase costs. Thus, the Mn content is 0.8% or more and 2.0% or less, preferably 1.0% or more and 1.8% or less.

P: 0.03% or less

P is effective in strengthening steel. However, an excessive addition of more than 0.03% P can cause embrittlement because of grain boundary segregation, decrease impact resistance, promote solidification cracking in welding, and decrease weld strength. Thus, the P content is 0.03% or less, preferably 0.02% or less, more preferably 0.01% or less.

S: 0.003% or less

S can segregate in grain boundaries and embrittle steel in hot working. S can form a sulfide that impairs local deformability. Furthermore, S can promote solidification cracking in welding and decrease weld strength. Thus, the S content is 0.003% or less, preferably 0.002% or less, more preferably 0.001% or less.

Al: 0.1% or less

Al can form ferrite and is effective in controlling the formation of ferrite in manufacture. However, an excessive addition of Al can impair the quality of a slab in steel manufacture. Thus, the Al content is 0.1% or less.

N: 0.008% or less

N can most significantly reduce the anti-aging effects of steel. The N content should therefore be minimized. More than 0.008% N can significantly reduce the anti-aging effects of steel. Thus, the N content is 0.008% or less.

The remainder are Fe and incidental impurities. In addition to these component elements, a high-strength galvanized steel sheet, which is manufactured according to the present invention, contains at least one of the following elements.

Cr: 0.05% or more and 1.0% or less, V: 0.005% or more and 0.5% or less, Mo: 0.005% or more and 0.5% or less, B: 0.0003% or more and 0.0050% or less, Ni: 0.05% or more and 1.0% or less, Cu: 0.05% or more and 1.0% or less, Ti: 0.01% or more and 0.1% or less, Nb: 0.01% or more and 0.1% or less.

Cr, V, and Mo can improve the balance between strength and ductility and can be added to steel if necessary. This effect can be achieved at Cr: 0.05% or more, V: 0.005% or more, or Mo: 0.005% or more. However, an excessive addition of more than Cr: 1.0%, V: 0.5%, or Mo: 0.5% results in an excessively large second phase fraction and may cause a marked increase in strength. This also increases costs. Thus, if present, the amounts of these elements should be Cr: 0.05% or more and 1.0% or less, V: 0.005% or more and 0.5% or less, and Mo: 0.005% or more and 0.5% or less.

B can prevent the formation and growth of ferrite in austenite grain boundaries and can be added to steel if necessary. This effect can be achieved at a B content of 0.0003% or more. However, a B content of more than 0.0050% results in poor formability. This also increases costs. Thus, if present, the B content is 0.0003% or more and 0.0050% or less.

Ni and Cu are effective in strengthening steel and may be used to strengthen steel within the ranges specified herein. Ni and Cu can promote internal oxidation and improve the adhesion of coating. These effects can be achieved at a Ni or Cu content of 0.05% or more. However, an addition of more than 1.0% Ni or Cu can impair the formability of a steel sheet. This also increases costs. Thus, if present, the Ni or Cu content is 0.05% or more and 1.0% or less.

Ti and Nb are effective in precipitation hardening of steel. This effect can be achieved at a Ti or Nb content of 0.01% or more. Ti and Nb may be used to strengthen steel within the range specified herein. However, a Ti or Nb content of more than 0.1% results in poor formability and shape fixability. This also increases costs. Thus, if present, the Ti content is 0.01% or more and 0.1% or less, and the Nb content is 0.01% or more and 0.1% or less.

A high-strength galvanized steel sheet, which is manufactured according to the present invention, can contain Ta or Sn or both.

Ta: 0.001% to 0.010%, Sn: 0.002% to 0.2%

Like Ti or Nb, Ta can form an alloy carbide or an alloy carbonitride and contribute to high strength. In addition, Ta can partly dissolve in Nb carbide or Nb carbonitride and form a composite precipitate, such as (Nb,Ta)(C,N). Thus, Ta can significantly reduce the coarsening of a precipitate and effectively stabilize the contribution of precipitation hardening to strength. Thus, if present, the Ta content is desirably 0.001% or more. However, an excessive addition of Ta results in the saturation of a precipitate stabilizing effect and increases alloy cost. Thus, if present, the Ta content is desirably 0.010% or less.

Sn can prevent nitriding or oxidation of the surface of a steel sheet and decarbonization of a region having a thickness of several tens of micrometers in an oxidized steel sheet surface layer. This can prevent a decrease in the formation of martensite on the surface of a steel sheet and improve fatigue characteristics and anti-aging effects. When Sn is added in order to prevent nitriding or oxidation, the Sn content is desirably 0.002% or more. However, more than 0.2% Sn results in low tenacity. Thus, the Sn content is desirably 0.2% or less.

A high-strength galvanized steel sheet, which is manufactured according to the present invention, can contain Sb.

Sb: 0.002% to 0.2%

Like Sn, Sb can prevent nitriding or oxidation of the surface of a steel sheet or decarbonization of a region having a thickness of several tens of micrometers in an oxidized steel sheet surface layer. This can prevent a decrease in the formation of martensite on the surface of a steel sheet and improve fatigue characteristics and anti-aging effects. When Sb is added in order to prevent nitriding or oxidation, the Sn content is desirably 0.002% or more. However, more than 0.2% Sn results in low tenacity. Thus, the Sn content is desirably 0.2% or less.

2) Microstructure

Area ratio of ferrite phase: 75% or more

In order to achieve high ductility, the area ratio of a ferrite phase must be 75% or more.

Area ratio of bainitic ferrite phase: 1% or more

In order to achieve high stretch flangeability, that is, in order to reduce a difference in hardness between soft ferrite and hard martensite, the area ratio of a bainitic ferrite phase must be 1% or more.

Area ratio of pearlite phase: 1% or more and 10% or less

In order to achieve high stretch flangeability, the area ratio of a pearlite phase must be 1% or more. In order to improve the balance between strength and ductility, the area ratio of a pearlite phase is 10% or less.

Area ratio of martensite phase: less than 5%

In order to ensure material stability, the area ratio of a martensite phase, which greatly affects tensile properties (TS and EL), must be less than 5%.

```
Area ratio of martensite phase/(area ratio of bainitic ferrite phase + area ratio of pearlite phase) ≤ 0.6
```

In order to ensure material stability, the second phase should contain a reduced amount of martensite, which can cause variations in the quality of material, and an increased amount of bainitic ferrite or pearlite, which is softer than martensite. In other words, the second phase should satisfy the area ratio of the martensite phase/(the area ratio of the bainitic ferrite phase + the area ratio of the pearlite phase) ≤ 0.6.
In addition to ferrite, bainitic ferrite, pearlite, and martensite, retained austenite, tempered martensite, or carbide, such as cementite, may be formed. However, the objects of the present invention can be achieved when ferrite, bainitic ferrite, pearlite, and martensite have the area ratios described above.
The term "the area ratio of a ferrite, bainitic ferrite, pearlite, or martensite phase", as used herein, refers to the area percentage constituted by the corresponding phase with respect to an observed area.

3) Manufacturing Conditions

A manufacturing method according to the present invention involves hot rolling, pickling, and if necessary cold rolling a steel slab having a composition within the composition range described above to form a steel sheet, heating the steel sheet to a temperature of 650°C or more at an average heating rate of 5°C/s or more, holding the steel sheet at a temperature in the range of 750°C to 900°C for 15 to 600 seconds, cooling the steel sheet, holding the steel sheet at a temperature in the range of 450°C to 550°C for 10 to 200 seconds, galvanizing the steel sheet, and alloying the galvanized steel sheet at a temperature in the range of 500°C to 600°C under conditions satisfying the following formula.

$$0.45 \leq \exp[200/(400 - T)] \times \ln(t) \leq 1.0$$

T: average holding temperature (°C), t: holding time (s)
(wherein exp(X) and ln(X) represent the exponential function and the natural logarithm of X, respectively)

Steel having the composition described above is generally formed into an ingot by a known process. The ingot is formed into a slab through blooming or continuous casting. The slab is then hot-rolled to produce a hot coil. In hot rolling, preferably, the slab is heated to a temperature in the range of 1100°C to 1300°C, is hot-rolled at a final finishing temperature of 850°C or more, and is coiled into a steel strip at a temperature in the range of 400°C to 650°C. A coiling temperature of more than 650°C results in coarsening of carbide in the hot-rolled sheet. Coarse carbide sometimes does not melt during soaking. Thus, the sheet may have insufficient strength. The hot-rolled sheet is then generally subjected to preliminary treatment, such as pickling or degreasing, by a known method and is then cold-rolled if necessary. Cold rolling may be performed under any conditions, preferably at a rolling reduction of 30% or more. This is because cold rolling at a low rolling reduction cannot promote recrystallization of ferrite and sometimes forms residual unrecrystallized ferrite, resulting in low ductility and stretch flangeability.

Heating to temperature of 650°C or more at average heating rate of 5°C/s or more

When the average heating rate to a temperature of 650°C or more is less than 5°C/s, a finely and uniformly dispersed austenite phase cannot be formed during annealing, and a second phase is locally concentrated in the final microstructure. Thus, it is difficult to achieve high stretch flangeability. Furthermore, such a low average heating rate necessitates the use of a longer furnace than normal furnaces and therefore results in high costs because of high energy consumption and in low production efficiency. The furnace is preferably a direct fired furnace (DFF). This is because rapid heating in a DFF can form an internal oxidation layer, prevent the concentration of oxides of Si, Mn, and other elements in the top layer of a steel sheet, and achieve high wettability.

Holding at temperature in the range of 750°C to 900°C for 15 to 600 seconds

Annealing (holding) is performed at a temperature in the range of 750°C to 900°C, more specifically, in an austenite single-phase region or an austenite-ferrite two-phase region, for 15 to 600 seconds. An annealing temperature of less than 750°C or a holding (annealing) time of less than 15 seconds may result in insufficient fusion of hard cementite in a steel sheet or incomplete recrystallization of ferrite, thus resulting in low ductility or stretch flangeability. An annealing temperature of more than 900°C results in marked growth of austenite grains, which makes it difficult to stabilize bainitic ferrite through bainite transformation during holding after cooling, thus resulting in poor stretch flangeability. A holding (annealing) time of more than 600 seconds may result in coarsening of austenite, make it difficult to secure desired strength, and result in high costs because of high energy consumption.

Holding at temperature in the range of 450°C to 550°C for 10 to 200 seconds

When the holding temperature is more than 550°C or when the holding time is less than 10 seconds, bainite transformation is not promoted, and bainitic ferrite is negligibly formed. Thus, desired stretch flangeability cannot be achieved. When the holding temperature is less than 450°C or when the holding time is more than 200 seconds, most of the second phase is composed of austenite and bainitic ferrite that contain a large amount of dissolved carbon formed by bainite transformation. This results in an insufficient area ratio of a pearlite phase and a high area ratio of a hard martensite phase. Thus, it is difficult to achieve high stretch flangeability and ensure material stability.

Subsequently, a steel sheet is immersed in a plating bath at a common temperature and is subjected to galvanizing. The amount of coating is controlled, for example, by gas wiping. The galvanized steel sheet is then alloyed under the following conditions.

The coating of the galvanized steel sheet is alloyed at a temperature in the range of 500°C to 600°C such that the average holding temperature T (°C) and the holding time t (s) can satisfy the following formula.

$$0.45 \leq \exp[200/(400 - T)] \times \ln(t) \leq 1.0$$

When the $\exp[200/(400 - T)] \times \ln(t)$ is less than 0.45, the final microstructure contains much martensite, and hard martensite adjoins soft ferrite. This causes a large difference in hardness between the different phases and results in poor stretch flangeability and material stability. Furthermore, the galvanizing layer is insufficiently alloyed. When $\exp[200/(400 - T)] \times \ln(t)$ is more than 1.0, untransformed austenite is mostly transformed into cementite or pearlite, which results in unsatisfactory balance between strength and ductility.

The holding temperature of heat treatment in a manufacturing process according to the present invention may vary within the temperature range described above. The heating rate may also vary within the range described above without departing from the gist of the present invention. A steel sheet may be heat-treated in any facility provided that a desired thermal history is satisfied. In addition, skin pass rolling of a steel sheet according to the present invention after heat treatment for the purpose of shape correction is also within the scope of the present invention. Although the present invention is based on the assumption that steel is manufactured by common steel manufacture, casting, and hot-rolling processes, part or all of the hot-rolling process may be eliminated, for example, by thin casting.

[EXAMPLES]

Steel that contained the components listed in Table 1 and the remainder of Fe and incidental impurities was melted in a converter and was formed into a slab by continuous casting. The slab was heated to 1200°C, was heat-rolled into a sheet having a thickness of 3.5 mm at a finishing temperature in the range of 870°C to 920°C, and was coiled at 520°C. The hot-rolled sheet was then pickled and was cold-rolled at a rolling reduction listed in Table 2 to form a cold-rolled steel sheet. A hot-rolled sheet not subjected to cold rolling was also prepared. The cold-rolled steel sheet or the hot-rolled steel sheet (after pickling) was then subjected to annealing, galvanizing, and alloying in a continuous galvanizing line under conditions listed in Table 2 to form a galvanized steel sheet. The amount of coating was in the range of 35 to 45 g/m$^2$ per side.

The area ratios of ferrite, bainitic ferrite, pearlite, and martensite phases in the galvanized steel sheet were determined by polishing a vertical cross section parallel to the rolling direction of the steel sheet, etching the cross section with 3% nital, observing 10 visual fields with a scanning electron microscope (SEM) at a magnification ratio of 2000, and performing image processing with Image-Pro manufactured by Media Cybernetics.

The volume percentage of retained austenite is the ratio of the integrated X-ray diffraction intensity of {200}, {220}, and {311} planes in fcc iron to the integrated X-ray diffraction intensity of {200}, {211}, and {220} planes in bcc iron at a quarter thickness using a Mo-K$\alpha$ line source.

A tensile test was performed to measure the tensile strength (TS) and the total elongation (EL) of a JIS No. 5 specimen in accordance with Japanese Industrial Standards (JIS Z 2241) such that the tensile direction was perpendicular to the rolling direction of a steel sheet. In the present invention, TS x EL $\geq$ 19000 MPa% was considered to be high ductility.

A stretch flangeability test was performed in accordance with the Japan Iron and Steel Federation standard (JFST 1001). A hole having a diameter of 10 mm was formed in a steel sheet. A 60-degree conical punch was plunged in the hole while the periphery of the steel sheet was fixed. The diameter of the hole just before a crack developed was measured. The stretch flangeability was evaluated with respect to the hole expansion ratio $\lambda$ (%) calculated by the following equation.

$$\text{Maximum hole expansion ratio } \lambda \text{ (\%)} = \{(Df - D0)/D0\} \times 100$$

Df denotes the diameter (mm) of the hole when a crack developed, and D0 denotes the initial diameter (mm) of the hole.

In the present invention, $\lambda \geq 70$ (%) was considered to be satisfactory.

Spot welding and the evaluation of spot welding were in conformity with The Japan Welding Engineering Society standard (WES 7301). Two steel sheets were spot-welded such that the nugget diameter in a cross section was 5.0 mm. The shear tensile strength and the cross tension strength of the welded sheet were measured to calculate ductility ratio (cross tension strength/shear tensile strength). In the present invention, the ductility ratio $\geq$ 0.5 was considered to be satisfactory. Table 3 shows the results.

[Table 1]

| Table 1 | | | | | | | | | | | | | | | | | | | Note |
|---|---|---|---|---|---|---|---|---|---|---|---|---|---|---|---|---|---|---|---|
| Steel type | Components (mass%) | | | | | | | | | | | | | | | | | | Note |
| | C | Si | Mn | P | S | Al | N | Cr | V | Mo | Nb | Ti | B | Ni | Cu | Ta | Sn | Sb | $[C\%] \times [Si\%]$ | |
| A | 0,067 | 0,74 | 1,64 | 0,022 | 0,0005 | 0,022 | 0,0020 | | | | | | | | | | | | 0,05 | Comparative example |
| B | 0,091 | 1,45 | 1,25 | 0,011 | 0,0021 | 0,027 | 0,0015 | | | | | | | | | | | | 0,13 | Comparative example |
| C | 0,074 | 2,26 | 0,86 | 0,024 | 0,0007 | 0,018 | 0,0020 | | | | | | | | | | | | 0,17 | Comparative example |
| D | 0,060 | 0,97 | 1,62 | 0,029 | 0,0030 | 0,014 | 0,0025 | 0,27 | | | | | | | | | | | 0,06 | Working example |
| E | 0,045 | 1,33 | 1,98 | 0,005 | 0,0022 | 0,015 | 0,0038 | | 0,13 | | | | | | | | | | 0,06 | Working example |
| F | 0,083 | 0,85 | 1,60 | 0,027 | 0,0026 | 0,022 | 0,0040 | | | 0,05 | | | | | | | | | 0,07 | Working example |
| G | 0,093 | 2,02 | 1,62 | 0,023 | 0,0022 | 0,035 | 0,0038 | | | | 0,023 | | | | | | | | 0,19 | Working example |
| H | 0,051 | 0,71 | 1,57 | 0,014 | 0,0016 | 0,011 | 0,0017 | | | | | 0,019 | | | | | | | 0,04 | Working example |
| I | 0,099 | 1,52 | 1,37 | 0,026 | 0,0020 | 0,028 | 0,0020 | | | | | | 0,0009 | | | | | | 0,15 | Working example |
| J | 0,071 | 1,23 | 1,58 | 0,013 | 0,0028 | 0,040 | 0,0031 | | | | | | | 0,23 | 0,20 | | | | 0,09 | Working example |
| a | 0,091 | 0,64 | 1,54 | 0,022 | 0,0028 | 0,031 | 0,0014 | | | | | | | | | | | | 0,06 | Comparative example |
| b | 0,140 | 1,35 | 1,58 | 0,020 | 0,0011 | 0,036 | 0,0022 | | | | | | | | | | | | 0,19 | Comparative example |
| c | 0,064 | 1,48 | 2,18 | 0,008 | 0,0016 | 0,024 | 0,0026 | | | | | | | | | | | | 0,09 | Comparative example |
| d | 0,078 | 1,49 | 1,49 | 0,046 | 0,0010 | 0,017 | 0,0023 | | | | | | | | | | | | 0,12 | Comparative example |
| e | 0,092 | 2,25 | 1,14 | 0,019 | 0,0015 | 0,026 | 0,0035 | | | | | | | | | | | | 0,21 | Comparative example |
| K | 0,091 | 1,23 | 1,55 | 0,024 | 0,0021 | 0,034 | 0,0036 | | | | | | | | | 0,007 | 0,09 | | 0,11 | Comparative example |
| L | 0,077 | 1,42 | 1,38 | 0,013 | 0,0014 | 0,033 | 0,0028 | | | | | | | | | | | 0,009 | 0,11 | Comparative example |

Underlined values are out of the scope of the present invention.

[Table 2]

| Table 2 | | | | Continuous galvanizing conditions | | | | | | | | Note |
| Steel No. | Steel type | Rolling reduction (%) | Thickness (mm) | Heating temperature (°C) | Heating rate (°C/s) | Annealing temperature (°C) | Holding time (s) | Holding time at 450-550°C (s) | Alloying | | | |
| | | | | | | | | | Average holding temperature T (°C) | Holding time t(s) | $\exp[200/(400-T)] \times \ln(t)$ | |
| 1 | A | 60 | 1,4 | 720 | 15 | 825 | 160 | 60 | 560 | 15 | 0,776 | Comparative example |
| 2 | A | 60 | 1,4 | 700 | 15 | 740 | 160 | 60 | 560 | 15 | 0,776 | Comparative example |
| 3 | A | 60 | 1,4 | 720 | 15 | 825 | 160 | 60 | 480 | 15 | 0,222 | Comparative example |
| 4 | A | 60 | 1,4 | 720 | 15 | 825 | 160 | 60 | 560 | 3 | 0,315 | Comparative example |
| 5 | A | - | 2,0 | 720 | 15 | 825 | 160 | 60 | 560 | 15 | 0,776 | Comparative example |
| 6 | B | 60 | 1,4 | 720 | 15 | 825 | 160 | 60 | 560 | 15 | 0,776 | Comparative example |
| 7 | B | 60 | 1,4 | 720 | 15 | 825 | 160 | 60 | 560 | 60 | 1,173 | Comparative example |
| 8 | B | 60 | 1,4 | 720 | 15 | 825 | 160 | 60 | 620 | 15 | 1,091 | Comparative example |
| 9 | C | 60 | 1,4 | 720 | 15 | 825 | 160 | 60 | 560 | 15 | 0,776 | Comparative example |
| 10 | D | 60 | 1,4 | 720 | 15 | 825 | 160 | 60 | 560 | 15 | 0,776 | Working example |
| 11 | D | 60 | 1,4 | 720 | 15 | 825 | 160 | 5 | 560 | 15 | 0,776 | Comparative example |
| 12 | D | 60 | 1,4 | 720 | 15 | 825 | 10 | 60 | 560 | 15 | 0,776 | Comparative example |

EP 2 527 484 B1

Table 2

| Steel No. | Steel type | Rolling reduction (%) | Thickness (mm) | Continuous galvanizing conditions | | | | | Alloying | | | Note |
| | | | | Heating temperature (°C) | Heating rate (°C/s) | Annealing temperature (°C) | Holding time (s) | Holding time at 450-550°C (s) | Average holding temperature T (°C) | Holding time t(s) | exp [200/ (400-T)] ×ln(t) | |
|---|---|---|---|---|---|---|---|---|---|---|---|---|
| 13 | E | 60 | 1,4 | 720 | 15 | 825 | 160 | 60 | 560 | 15 | 0,776 | Working example |
| 14 | F | 60 | 1,4 | 720 | 15 | 825 | 160 | 60 | 560 | 15 | 0,776 | Working example |
| 15 | G | 60 | 1,4 | 720 | 15 | 825 | 160 | 60 | 560 | 15 | 0,776 | Working example |
| 16 | H | 60 | 1,4 | 720 | 15 | 825 | 160 | 60 | 560 | 15 | 0,776 | Working example |
| 17 | I | 60 | 1,4 | 720 | 15 | 825 | 160 | 60 | 560 | 15 | 0,776 | Working example |
| 18 | J | 60 | 1,4 | 720 | 15 | 825 | 160 | 60 | 560 | 15 | 0,776 | Working example |
| 19 | a | 60 | 1,4 | 720 | 15 | 825 | 160 | 60 | 560 | 15 | 0,776 | Comparative example |
| 20 | b | 60 | 1,4 | 720 | 15 | 825 | 160 | 60 | 560 | 15 | 0,776 | Comparative example |
| 21 | c | 60 | 1,4 | 720 | 15 | 825 | 160 | 60 | 560 | 15 | 0,776 | Comparative example |
| 22 | d | 60 | 1,4 | 720 | 15 | 825 | 160 | 60 | 560 | 15 | 0,776 | Comparative example |
| 23 | e | 60 | 1,4 | 720 | 15 | 825 | 160 | 60 | 560 | 15 | 0,776 | Comparative example |
| 24 | B | 60 | 2,0 | 660 | 15 | 770 | 160 | 60 | 560 | 15 | 0,776 | Working example |

| Table 2 | | | | | | | | | | | | |
|---|---|---|---|---|---|---|---|---|---|---|---|---|
| | | | | Continuous galvanizing conditions | | | | | | | | |
| | | | | | | | | | Alloying | | | Note |
| Steel No. | Steel type | Rolling reduction (%) | Thickness (mm) | Heating temperature (°C) | Heating rate (°C/s) | Annealing temperature (°C) | Holding time (s) | Holding time at 450-550°C (s) | Average holding temperature T (°C) | Holding time t(s) | exp [200/ (400-T)] ×ln(t) | |
| 25 | D | 60 | 2,0 | 660 | 15 | 770 | 160 | 60 | 560 | 15 | 0,776 | Working example |
| 26 | K | 60 | 1,4 | 720 | 15 | 825 | 160 | 60 | 560 | 15 | 0,776 | Comparative example |
| 27 | L | 60 | 1,4 | 720 | 15 | 825 | 160 | 60 | 560 | 15 | 0,776 | Comparative example |
| | Underlined values are out of the scope of the present invention. | | | | | | | | | | | |

[Table 3]

| Steel No. | Steel type | Rolling reduction (%) | Thickness (mm) | Structure | | | | | | Characteristics | | | | | | Note |
|---|---|---|---|---|---|---|---|---|---|---|---|---|---|---|---|---|
| | | | | F | BF | P | M | RA | M/ (BF+P) | TS | EL | λ | TS×EL | Shear tensile strength (kN) | Ductility ratio | |
| | | | | Ferrite (%) | Bainitic ferrite (%) | Pearlite (%) | Martensite (%) | Retained austenite (%) | | (MPa) | (%) | (%) | (MPa·%) | | | |
| 1 | A | 60 | 1,4 | 79 | 7 | 8 | 4 | 2 | 0,27 | 656 | 30 | 94 | 19680 | 15,11 | 0,63 | Comparative example |
| 2 | A | 60 | 1,4 | <u>70</u> | <u>0</u> | 5 | <u>12</u> | 1 | <u>2,40</u> | 705 | 25 | <u>42</u> | 17625 | 12,84 | 0,59 | Comparative example |
| 3 | A | 60 | 1,4 | 79 | 7 | 3 | <u>10</u> | 1 | <u>1,00</u> | 711 | 29 | <u>53</u> | 20619 | 12,30 | 0,58 | Comparative example |
| 4 | A | 60 | 1,4 | 79 | 7 | 5 | 8 | 1 | <u>0,67</u> | 685 | 28 | <u>68</u> | 19180 | 12,62 | 0,70 | Comparative example |
| 5 | A | - | 2,0 | 82 | 9 | 7 | 2 | 0 | 0,13 | 589 | 33 | 109 | 19437 | 22,35 | 0,62 | Comparative example |
| 6 | B | 60 | 1,4 | 83 | 8 | 6 | 3 | 0 | 0,21 | 602 | 32 | 100 | 19264 | 14,01 | 0,59 | Comparative example |
| 7 | B | 60 | 1,4 | 83 | 5 | <u>11</u> | 1 | 0 | 0,06 | 576 | 29 | 115 | 16704 | 13,20 | 0,57 | Comparative example |
| 8 | B | 60 | 1,4 | 83 | 5 | <u>12</u> | 0 | 0 | 0 | 563 | 30 | 120 | 16890 | 12,97 | 0,60 | Comparative example |
| 9 | C | 60 | 1,4 | 90 | 3 | 3 | 3 | 1 | 0,50 | 601 | 33 | 98 | 19833 | 14,05 | 0,57 | Comparative example |
| 10 | D | 60 | 1,4 | 85 | 6 | 5 | 2 | 2 | 0,18 | 615 | 31 | 107 | 19065 | 14,24 | 0,62 | Working example |
| 11 | D | 60 | 1,4 | 85 | 2 | 5 | <u>8</u> | 0 | <u>1,14</u> | 695 | 28 | <u>69</u> | 19460 | 12,85 | 0,56 | Comparative example |
| 12 | D | 60 | 1,4 | <u>73</u> | <u>0</u> | 7 | <u>12</u> | 1 | <u>1,71</u> | 774 | 22 | <u>40</u> | 17028 | 12,62 | 0,62 | Comparative example |

Table 3

| Table 3 | | | | Structure | | | | | | Characteristics | | | | | | Note |
|---|---|---|---|---|---|---|---|---|---|---|---|---|---|---|---|---|
| Steel No. | Steel type | Rolling re-duction (%) | Thickness (mm) | F | BF | P | M | RA | M/(BF+P) | TS | EL | λ | TS×EL | Shear tensile strength (kN) | Ductility ratio | |
| | | | | Ferrite (%) | Bainitic ferrite (%) | Pearlite (%) | Martensite (%) | Retained austenite (%) | | (MPa) | (%) | (%) | (MPa·%) | | | |
| 13 | E | 60 | 1,4 | 93 | 3 | 2 | 2 | 0 | 0,40 | 554 | 36 | 108 | 19944 | 14,15 | 0,61 | Working example |
| 14 | F | 60 | 1,4 | 81 | 8 | 5 | 4 | 2 | 0,31 | 655 | 30 | 96 | 19650 | 15,09 | 0,55 | Working example |
| 15 | G | 60 | 1,4 | 86 | 7 | 3 | 4 | 0 | 0,40 | 601 | 32 | 92 | 19232 | 13,99 | 0,58 | Working example |
| 16 | H | 60 | 1,4 | 82 | 8 | 6 | 4 | 0 | 0,29 | 622 | 31 | 96 | 19282 | 14,40 | 0,55 | Working example |
| 17 | I | 60 | 1,4 | 81 | 9 | 6 | 3 | 1 | 0,20 | 622 | 31 | 101 | 19282 | 14,40 | 0,56 | Working example |
| 18 | J | 60 | 1,4 | 80 | 8 | 7 | 3 | 2 | 0,20 | 649 | 30 | 98 | 19470 | 14,95 | 0,58 | Working example |
| 19 | a | 60 | 1,4 | 82 | 2 | 5 | 10 | 1 | 1,43 | 705 | 24 | 55 | 16920 | 12,75 | 0,56 | Comparative example |
| 20 | b | 60 | 1,4 | 73 | 5 | 5 | 13 | 4 | 1,30 | 675 | 26 | 30 | 17550 | 12,24 | 0,64 | Comparative example |
| 21 | c | 60 | 1,4 | 71 | 4 | 9 | 14 | 2 | 1,08 | 683 | 26 | 42 | 17758 | 12,42 | 0,57 | Comparative example |
| 22 | d | 60 | 1,4 | 83 | 7 | 5 | 4 | 1 | 0,33 | 635 | 30 | 94 | 19050 | 14,63 | 0,38 | Comparative example |
| 23 | e | 60 | 1,4 | 85 | 6 | 4 | 3 | 2 | 0,30 | 628 | 31 | 99 | 19468 | 14,54 | 0,34 | Comparative example |
| 24 | B | 60 | 2,0 | 89 | 3 | 4 | 4 | 0 | 0,57 | 595 | 32 | 81 | 19040 | 22,46 | 0,61 | Comparative example |

EP 2 527 484 B1

14

(continued)

Table 3

| Steel No. | Steel type | Rolling reduction (%) | Thickness (mm) | Structure | | | | | | Characteristics | | | | | | Note |
|---|---|---|---|---|---|---|---|---|---|---|---|---|---|---|---|---|
| | | | | F Ferrite (%) | BF Bainitic ferrite (%) | P Pearlite (%) | M Martensite (%) | RA Retained austenite (%) | M/(BF+P) | TS (MPa) | EL (%) | λ (%) | TS×EL (MPa·%) | Shear tensile strength (kN) | Ductility ratio | |
| 25 | D | 60 | 2,0 | 88 | 5 | 4 | 3 | 0 | 0,33 | 613 | 32 | 77 | 19616 | 23,14 | 0,62 | Working example |
| 26 | K | 60 | 1,4 | 82 | 7 | 6 | 4 | 1 | 0,31 | 621 | 32 | 97 | 19872 | 14,45 | 0,58 | Comparative example |
| 27 | L | 60 | 1,4 | 84 | 5 | 7 | 4 | 0 | 0,33 | 618 | 32 | 88 | 19776 | 14,38 | 0,55 | Comparative example |

Underlined values are out of the scope of the present invention.

M/(BF+P): area ratio of martensite phase/(area ratio of bainitic ferrite phase+area ratio of pearlite phase)

All the high-strength galvanized steel sheets according to the working examples had a TS of 540 MPa or more, indicating excellent ductility and stretch flangeability as well as high spot weld strength. In contrast, the high-strength galvanized steel sheets according to comparative examples had poor ductility, stretch flangeability, and/or spot weld strength.

[Industrial Applicability]

The present invention allows the manufacture of a high-strength galvanized steel sheet that has high strength (tensile strength TS of 540 MPa or more) and excellent formability (high ductility and stretch flangeability) and spot weldability. For example, use of a high-strength galvanized steel sheet, which is manufactured according to the present invention, in an automobile structural member can further improve the safety of occupants and improve mileage because of a significant reduction of an automobile body weight.

**Claims**

1.  A method for manufacturing a high-strength galvanized steel sheet having excellent formability and spot weldability, comprising: hot rolling, pickling, and if necessary cold rolling a steel slab having a composition consisting of, on a mass percent basis, C: 0.04% or more and 0.10% or less, Si: 0.7% or more and 2.3% or less, Mn: 0.8% or more and 2.0% or less, P: 0.03% or less, S: 0.003% or less, Al: 0.1% or less, N: 0.008% or less, at least one element selected from the group consisting of Cr: 0.05% or more and 1.0% or less, V: 0.005% or more and 0.5% or less, Mo: 0.005% or more and 0.5% or less, B: 0.0003% or more and 0.0050% or less, Ni: 0.05% or more and 1.0% or less, Cu: 0.05% or more and 1.0% or less, Ti: 0.01% or more and 0.1% or less, and Nb: 0.01% or more and 0.1% or less, optionally at least one element selected from the group consisting of Ta: 0.001% or more and 0.010% or less, Sn: 0.002% or more and 0.2% or less and Sb: 0.002% or more and 0.2% or less, and the remainder of iron and incidental impurities, to form a steel sheet, heating the steel sheet to a temperature of 650°C or more at an average heating rate of 5°C/s or more, holding the steel sheet at a temperature in the range of 750°C to 900°C for 15 to 600 seconds, cooling the steel sheet, holding the steel sheet at a temperature in the range of 450°C to 550°C for 10 to 200 seconds, galvanizing the steel sheet, and alloying the galvanized steel sheet at a temperature in the range of 500°C to 600°C under conditions satisfying the following formula

$$0.45 \leq \exp[200/(400 - T)] \times \ln(t) \leq 1.0$$

    T: average holding temperature (°C), t: holding time (s), wherein the high-strength galvanized steel sheet has a ductility ratio of 0.5 or higher.

**Patentansprüche**

1.  Verfahren zur Herstellung eines hochfesten feuerverzinkten Stahlblechs mit hervorragender Verarbeitbarkeit und Punktschweißbarkeit, umfassend: Warmwalzen, Beizen und bei Bedarf Kaltwalzen einer Stahlbramme mit einer Zusammensetzung, die auf Massenprozentbasis aus Folgendem besteht: C: 0,04 % oder mehr und 0,10 % oder weniger, Si: 0,7 % oder mehr und 2,3 % oder weniger, Mn: 0,8 % oder mehr und 2,0 % oder weniger, P: 0,03 % oder weniger, S: 0,003 % oder weniger, Al: 0,1 % oder weniger, N: 0,008 % oder weniger, mindestens einem Element, das aus der Gruppe gewählt wird, die aus Folgendem besteht: Cr: 0,05 % oder mehr und 1,0 % oder weniger, V: 0,005 % oder mehr und 0,5 % oder weniger, Mo: 0,005 % oder mehr und 0,5 % oder weniger, B: 0,0003 % oder mehr und 0,0050 % oder weniger, Ni: 0,05 % oder mehr und 1,0 % oder weniger, Cu: 0,05 % oder mehr und 1,0 % oder weniger, Ti: 0,01 % oder mehr und 0,1 % oder weniger, und Nb: 0,01% oder mehr und 0,1 % oder weniger, optional mindestens einem Element, das aus der Gruppe gewählt wird, die aus Folgendem besteht: Ta: 0,001 % oder mehr und 0,010 % oder weniger, Sn: 0,002 % oder mehr und 0,2 % oder weniger, und Sb: 0,002 % oder mehr und 0,2 % oder weniger, und wobei der Rest Eisen und zufällige Verunreinigungen sind, um ein Stahlblech zu bilden, Erwärmen des Stahlblechs auf eine Temperatur von 650 °C oder mehr bei einer durchschnittlichen Erwärmungsgeschwindigkeit von 5 °C/Sek oder mehr, Halten des Stahlblechs auf einer Temperatur im Bereich von 750 °C bis 900 °C für 15 bis 600 Sekunden, Abkühlen des Stahlblechs, Halten des Stahlblechs auf einer Temperatur im Bereich von 450 °C bis 550 °C für 10 bis 200 Sekunden, Feuerverzinken des Stahlblechs, und Legieren des feuerverzinkten Stahlblechs auf einer Temperatur im Bereich von 500 °C bis 600 °C unter Bedingungen, welche die folgende Formel erfüllen:

$$0{,}45 \leq \exp[200/(400 - T)] \times \ln(t) \leq 1{,}0$$

T: durchschnittliche Haltetemperatur (°C), t: Haltezeit (S), wobei das hochfeste feuerverzinkte Stahlblech ein Verformbarkeitsverhältnis von 0,5 oder höher aufweist.

**Revendications**

1. Procédé de fabrication d'une tôle d'acier galvanisé à haute résistance présentant d'excellentes propriétés de formage et de soudage par points, comprenant : le laminage à chaud, le décapage, et si nécessaire le laminage à froid d'une brame d'acier constituée, en pourcentage massique, de C : supérieur ou égal à 0,04 % et inférieur ou égal à 0,10 %, Si : supérieur ou égal à 0,7 % et inférieur ou égal à 2,3 %, Mn : supérieur ou égal à 0,8 % et inférieur ou égal à 2,0 %, P : inférieur ou égal à 0,03 %, S : inférieur ou égal à 0,003 %, Al : inférieur ou égal à 0,1 %, N : inférieur ou égal à 0,008 %, au moins un élément sélectionné parmi le groupe constitué par : Cr : supérieur ou égal à 0,05 % et inférieur ou égal à 1,0 %, V : supérieur ou égal à 0,005 % et inférieur ou égal à 0,5 %, Mo : supérieur ou égal à 0,005 % et inférieur ou égal à 0,5 %, B : supérieur ou égal à 0,0003 % et inférieur ou égal à 0,0050 %, Ni : supérieur ou égal à 0,05 % et inférieur ou égal à 1,0 %, Cu : supérieur ou égal à 0,05 % et inférieur ou égal à 1,0 %, Ti : supérieur ou égal à 0,01 % et inférieur ou égal à 0,1 %, et Nb : supérieur ou égal à 0,01 % et inférieur ou égal à 0,1 %, éventuellement au moins un élément sélectionné parmi le groupe constitué par : Ta : supérieur ou égal à 0,001 % et inférieur ou égal à 0,010 %, Sn : supérieur ou égal à 0,002 % et inférieur ou égal à 0,2 %, et Sb : supérieur ou égal à 0,002 % et inférieur ou égal à 0,2 %, et le reste consiste en du fer et des impuretés secondaires, pour former une tôle d'acier, le chauffage de la tôle d'acier à une température supérieure ou égale à 650°C à un taux de chauffage moyen supérieur ou égal à 5°C/s, le maintien de la tôle d'acier à une température comprise dans une plage de 750°C à 900°C durant 15 à 600 secondes, le refroidissement de la tôle d'acier, le maintien de la tôle d'acier à une température comprise dans une plage de 450°C à 550°C durant 10 à 200 secondes, la galvanisation de la tôle d'acier, et l'alliage de la tôle d'acier galvanisé à une température comprise dans une plage de 500°C à 600°C sous des conditions répondant à la formule suivante :

$$0{,}45 \leq \exp[200/(400-T)] \times \ln(t) \leq 1{,}0$$

T : température de maintien moyenne (°C), t : temps de maintien (s), dans lequel la tôle d'acier galvanisé à haute résistance présente un taux de ductilité supérieur ou égal à 0,5.

[FIG. 1]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001140022 A
- JP 4026744 A
- JP 2007182625 A
- JP 2001152287 A
- JP 2002080931 A

- JP 2001279377 A
- EP 2402470 A1
- EP 2527482 A1
- EP 2527483 A1
- WO 03010351 A1